# EUROPÄISCHE PATENTSCHRIFT

(11) **EP 4 469 943 B1**
(45) Veröffentlichungstag und Bekanntmachung des Hinweises auf die Patenterteilung: **03.12.2025**
(21) Anmeldenummer: 22834991.6
(22) Anmeldetag: 12.12.2022
(51) Int. Cl.: G06N 5/02, G06V 10/84, G06V 20/58, G01S 7/41, G01S 7/48, G01S 13/931, G01S 17/931, G06N 3/04

(54) **VERFAHREN ZUR DETEKTION VON GEISTEROBJEKTEN IN SENSORMESSUNGEN**
METHOD FOR DETECTING GHOST OBJECTS IN SENSOR MEASUREMENTS
PROCÉDÉ DE DÉTECTION D'OBJETS FANTÔMES DANS DES MESURES DE CAPTEUR

(30) Priorität: 28.01.2022 DE 102022000331
(43) Veröffentlichungstag der Anmeldung: 04.12.2024
(73) Patentinhaber: Mercedes-Benz Group AG, 70372 Stuttgart (DE)
(72) Erfinder: MONNINGER, Thomas, Menlo Park, 94025 (US); SCHMIDT, Julian, 78256 Steißlingen (DE); RUPPRECHT, Jan, 71083 Herrenberg (DE); RABA, David, 86152 Augsburg (DE); WELZ, Tobias, 70597 Stuttgart (DE)
(74) Vertreter: Novagraaf Group
(86) Internationale Anmeldenummer: PCT/EP2022/085336
(87) Internationale Veröffentlichungsnummer: WO 2023/143800

(56) Entgegenhaltungen:
- DE-A1- 102021 001 452
- DE-A1- 102021 005 084

## Beschreibung

Die Erfindung betrifft ein Verfahren zur Detektion von Geisterobjekten in Sensormessungen einer Umgebung eines Fahrzeugs.

Aus der DE 10 2020 124 236 A1 ist ein Verfahren für ein Radarsystem eines Fahrzeugs mit folgenden Schritten bekannt:
- Erkennen zweier oder mehrerer Objekte unter Verwendung des Radarsystems des Fahrzeugs;
- Initiieren von Spuren der zwei oder mehreren Objekte in einer Spurdatenbank, wobei die Spuren jeweils Daten für die zwei oder mehreren Objekte speichern und auf der Grundlage zusätzlicher Erkennungen der zwei oder mehreren Objekte aktualisiert werden, und die Spuren der zwei oder mehreren Objekte anfänglich nicht klassifizierte Spuren in der Spurdatenbank sind;
- Auswählen, unter Verwendung eines Prozessors, von zwei Spuren, die zwei der zwei oder mehreren Objekte aus der Spurdatenbank entsprechen, als Kandidatenpaar;
- Anwenden von Kriterien auf das Kandidatenpaar unter Verwendung des Prozessors, um zu bestimmen, ob eine Spur der beiden Spuren des Kandidatenpaars eine Spur eines Geisterobjekts ist, das aus einer Mehrwegreflexion resultiert, und eine andere Spur der beiden Spuren des Kandidatenpaars eine Spur eines wahren Objekts ist, das dem Geisterobjekt entspricht, wobei das Geisterobjekt die Erfassung des wahren Objekts an einer falschen Stelle darstellt;
- Klassifizieren des Kandidatenpaars in der Spurdatenbank unter Verwendung des Prozessors als Spuren eines wahren Objekt- und Geisterobjektpaares auf der Grundlage der Bestimmung, dass die eine Spur der beiden Spuren des Kandidatenpaares die Spur des Geisterobjektes und die andere Spur der beiden Spuren des Kandidatenpaares die Spur des wahren Objektes ist, das dem Geisterobjekt entspricht; und
- Berichten von Informationen aus der Spurdatenbank, und basierend auf dem Klassifizieren umfasst das Berichten das Bereitstellen der Daten nur für die Spur des wahren Objekts, wobei die Informationen zur Steuerung eines Betriebs des Fahrzeugs verwendet werden.

Die DE 10 2021 001 452 A1 beschreibt ein Verfahren zur Umgebungserfassung mittels eines Radars, wobei außerhalb einer Sichtlinie des Radars befindliche Objekte erkannt werden. Dabei werden in einem Verarbeitungsschritt mittels des Radars erfasste Rohradardaten vorverarbeitet und dabei für einen folgenden Verarbeitungsschritt angepasst. In einem folgenden Verarbeitungsschritt werden in den vorverarbeiteten Rohradardaten mittels eines Klassifizierungsalgorithmus Radarreflexionen ermittelt. In einem weiteren folgenden Verarbeitungsschritt wird anhand der Radarreflexionen eine Topologie einer Radarumgebung erzeugt und in einem weiteren folgenden Verarbeitungsschritt wird anhand von Radardetektionen in der Topologie der Radarumgebung zwischen direkt sichtbaren Objekten und außerhalb der Sichtlinie des Radars befindlichen Objekten unterschieden.

Weiterhin beschreibt die DE 10 2021 005 084 A1 ein Verfahren zur Identifizierung von Kartenattributen und Kartenbeziehungen von Objekten. Dabei werden dynamische Informationen, statische Informationen, umfassend geo-räumliche Entfernungen zwischen Objekten, semantische Informationen sowie Beziehungs-Informationen in einem Graph dargestellt. Über ein Graph-Neural-Network werden Kartenattribute und Kartenbeziehungen aus dem Graph gelernt, wobei zum Training des Graph-Neural-Networks eine Karte, in der zu lernende Kartenattribute und Kartenbeziehungen manuell gelabelt wurden, oder automatisiert generierte geometrische Informationen verwendet wird/werden.

Der Erfindung liegt die Aufgabe zu Grunde, ein neuartiges Verfahren zur Detektion von Geisterobjekten in Sensormessungen einer Umgebung eines Fahrzeugs anzugeben.

Die Aufgabe wird erfindungsgemäß gelöst durch ein Verfahren, welches die im Anspruch 1 angegebenen Merkmale aufweist.

Vorteilhafte Ausgestaltungen der Erfindung sind Gegenstand der Unteransprüche.

In dem Verfahren zur Detektion von Geisterobjekten in Sensormessungen einer Umgebung eines Fahrzeugs werden aus einer digitalen Straßenkarte Karten-Kontextinformationen gewonnen und in der Umgebung des Fahrzeugs Objekte mit zugehörigen Attributen erkannt.

Erfindungsgemäß werden soziale Kontextinformationen der Objekte zueinander generiert, wobei die sozialen Kontextinformationen aus Beziehungen von im Umkreis des Fahrzeugs vorhandenen Objekten zueinander generiert werden. Alle verfügbaren Daten einer Verkehrssituation mit dem Fahrzeug und den Objekten werden in einer Graphenstruktur, umfassend Knoten und Kanten, abgelegt, wobei relationale Informationen in der Graphenstruktur mittels der Kanten abgebildet werden. Unter Berücksichtigung der Karten-Kontextinformationen und der sozialen Kontextinformationen werden Anomalien und Muster in Merkmalen der Graphenstruktur gesucht und anhand erkannter Anomalien und Muster Geisterobjekte klassifiziert. Bei Sensormessungen mittels mehrerer Sensoren werden aus Sensormessungen einzelner Sensoren ermittelte Objekthypothesen berücksichtigt, wobei anhand zumindest einer Objekthypothese zumindest einer Sensormessung eines Sensors eine Detektion von Geisterobjekten in mittels zumindest eines weiteren Sensors durchgeführten Sensormessungen plausibilisiert oder deplausibilisiert wird.

Für einen automatisierten, insbesondere hochautomatisierten oder autonomen Fahrbetrieb von Fahrzeugen ist eine präzise Erkennung von Objekten in der Umgebung des Fahrzeugs erforderlich. Um hohe Anforderungen an die Sicherheit bei automatisierten Fahrbetrieben, beispielsweise gemäß Level 2, Level 3, Level 4 und Level 5 der Norm SAE J3016, zu erfüllen, werden Sensormessungen von Sensormodalitäten, beispielsweise Kamerasensoren, Radarsensoren und/oder Lidarsensoren, benötigt. Dabei bilden die Sensormodalitäten insbesondere eine redundante Sensorik mit mehreren gleichartigen und/oder verschiedenen Sensormodalitäten. Die Sensormessungen der Sensormodalitäten werden dabei einzeln oder fusioniert genutzt.

Für eine größtmögliche Sicherheit muss eine Latenz einer Reaktion des Fahrzeugs auf ein Objekt minimal sein. Aus diesem Grund können wenige Sensormessungen oder kann jede einzelne Sensormessung eine Systemreaktion hervorrufen. Unter den Sensormessungen befinden sich neben wahr-positiven Messungen auch falsch-positive Messungen, bei denen ein Objekt an einer Stelle erkannt wurde, an der in Wirklichkeit keines ist. Falsch-positive Messungen können beispielsweise durch unerwünschte Sensorreflexionen, Fehldetektionen und/oder Detektionen von Darstellungen von Umgebungsobjekten, beispielsweise eines auf einer Plakatwerbung dargestellten Fahrzeugs, entstehen. Ein typisches Beispiel sind Radar-Reflexionen an Leitplanken oder Schilderbrücken.

Ein automatisiert betriebenes Fahrzeug generiert aus einer solchen falsch-positiven Messung ein Objekt. Auf Grund der Tatsache, dass dieses Objekt in der Realität nicht vorhanden ist, wird ein solches Objekt im Allgemeinen als Geisterobjekt bezeichnet. Reaktionen des automatisiert betriebenen Fahrzeugs auf Geisterobjekte können zu gefährlichen Situationen führen, beispielsweise zu einem Notbremsvorgang mit einem resultierenden Auffahrunfall.

Mittels des vorliegenden Verfahrens können Geisterobjekte besonders effektiv und zuverlässig detektiert werden. Dadurch, dass das Verfahren Informationen über alle Objekte in der Verkehrssituation bzw. Szene nutzt, kann für ein Objekt entschieden werden, ob dessen Attribute im Vergleich zu umliegenden Objekten auf eine Anomalie hinweisen. Dadurch, dass das Verfahren Kontextinformationen für eine umfangreiche Abbildung der Szene nutzt, kann eine kontextbasierte Klassifikation von Objekten realisiert werden, bei der beispielsweise das zugrundeliegende Straßennetz genutzt wird. Auch ist es mittels des Verfahrens möglich, zeitliche Aspekte zu berücksichtigen, um Muster über die zeitliche Dimension zu extrahieren.

Somit ermöglicht das Verfahren, die Umgebung des Fahrzeugs mit hoher Sensitivität zu erfassen und nachträglich Geisterobjekte, das heißt falsch-positive Messungen, zu erkennen und aus der Erfassung zu entfernen. Somit wird eine Gefahr verringert, dass wahre Objekte in der Umgebung nicht detektiert werden. Das heißt, eine Wahrscheinlichkeit falsch-negativer und falsch-positiver Messungen wird signifikant verringert.

Eine in einer möglichen Ausgestaltung des Verfahrens vorgesehene Erweiterung hin zu einer lernbasierten Klassifikation ermöglicht eine Extraktion von komplexen Mustern, die nicht manuell definierbar sind. Hieraus resultiert weiterhin, dass das Verfahren und ein dieses ausführendes System mit Daten skalierbar ist.

Ausführungsbeispiele der Erfindung werden im Folgenden anhand von Zeichnungen näher erläutert.

Dabei zeigen:
- Fig. 1: schematisch eine Draufsicht einer Verkehrssituation,
- Fig. 2: schematisch eine Draufsicht der Verkehrssituation gemäß Figur 1 mit generierten Knoten für eine Graphenstruktur,
- Fig. 3: schematisch die Knoten gemäß Figur 2 und diese verbindende Kanten für die Graphenstruktur,
- Fig. 4: schematisch eine Graphenstruktur mit mehreren Knoten und Beziehungen zwischen den Knoten und
- Fig. 5: schematisch einen Aufbau einer Graphenstruktur sowie eine Verarbeitung in der Graphenstruktur vorhandener Informationen mit einem graphenbasierten künstlichen neuronalen Netzwerk.

Einander entsprechende Teile sind in allen Figuren mit den gleichen Bezugszeichen versehen.

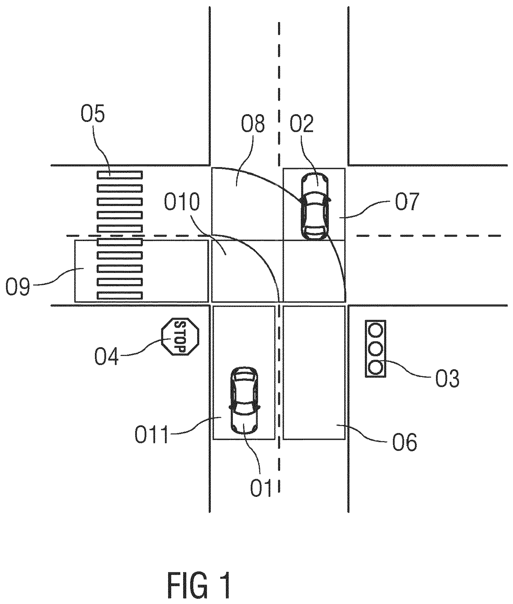

In Figur 1 ist eine Draufsicht einer Verkehrssituation an einer Straßenkreuzung mit aus einer digitalen Straßenkarte stammenden, als Spursegmente ausgebildeten Objekten O6 bis O11 dargestellt. Weiterhin sind ein als Verkehrsampel ausgebildetes Objekt O3, ein als Stoppschild ausgebildetes Objekt O4, ein als Fußgängerüberweg ausgebildetes Objekt O5 und zwei als Fahrzeuge ausgebildete Objekte O1, O2 im Bereich der Straßenkreuzung vorhanden.

Für einen automatisierten, insbesondere hochautomatisierten oder autonomen Fahrbetrieb von Fahrzeugen ist eine präzise Erkennung von Objekten O1 bis O11 in der Umgebung des Fahrzeugs erforderlich. Hierzu weisen automatisiert betriebene Fahrzeuge eine Umgebungserfassungssensorik, umfassend beispielsweise Lidare, Radare, Kameras und Ultraschallsensoren, auf. Dabei können jeweilige Sensormodalitäten redundant vorhanden sein. Bei der Umgebungserfassung werden Sensormessungen der Sensormodalitäten einzeln oder fusioniert genutzt. Hierbei müssen falsch-negative Messergebnisse, das heißt ein Nicht-Erkennen wahrer Objekte O1 bis O11 in der Umgebung, und falsch-positive Messergebnisse, das heißt ein Erkennen unwahrer Objekte O1 bis O11, so genannter Geisterobjekte, vermieden werden.

Bei einer Erfassung der Umgebung mit einer geringen Sensibilität besteht die Gefahr, dass nicht alle wahren Objekte O1 bis O11 in der Umgebung erkannt werden, woraus sich gefährliche Situationen im automatisierten Fahrbetrieb des Fahrzeugs ergeben können.

Bei einer Erfassung der Umgebung mit einer hohen Sensibilität besteht dagegen die Gefahr, dass Geisterobjekte in der Umgebung erkannt werden, welche nicht in der Umgebung vorhanden sind. Auch hieraus können sich gefährliche Situationen im automatisierten Fahrbetrieb des Fahrzeugs ergeben.

Um entscheiden zu können, ob ein Objekt O1 bis O11 tatsächlich existiert, wird in einem Verfahren zur Detektion von Geisterobjekten in Sensormessungen einer Umgebung eines Fahrzeugs Kontextinformation der Verkehrssituation bzw. Verkehrsszene verwendet. Hierdurch wird ermöglicht, dass die Umgebung zunächst mit hoher Sensibilität erfasst wird und anschließend Geisterobjekte in den erfassten Sensormessungen erkannt und aus diesen entfernt werden.

Wertvolle Informationen liefert hierbei ein der Verkehrssituation unterliegendes Straßennetz, welches aus einer digitalen Straßenkarte als Karten-Kontextinformation entnommen wird. Das Straßennetz ist dabei unter anderem durch die als Spursegmente ausgebildeten Objekte O6 bis O11 beschrieben.

Weitere wertvolle Informationen liefern andere Fahrzeuge im Umkreis des Fahrzeugs, vorliegend beispielsweise die Objekte O1, O2. Aus Beziehungen der Objekte O1, O2 zueinander werden soziale Kontextinformationen generiert.

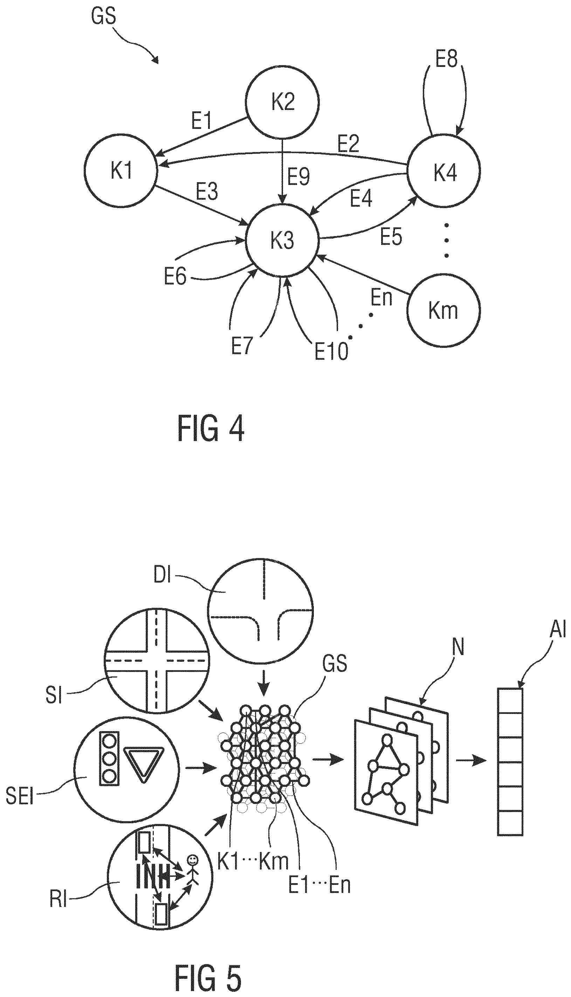

Um die hohe Sensibilität bei der Umgebungserfassung zu erreichen, werden in dem Verfahren alle verfügbaren Daten aus der Verkehrssituation in einer in Figur 5 näher dargestellten Graphenstruktur GS, dem so genannten Szenengraphen, abgelegt. Relationale Informationen werden in dieser Graphenstruktur GS mittels Kanten E1 bis En abgebildet, welche Knoten K1 bis Km verbinden.

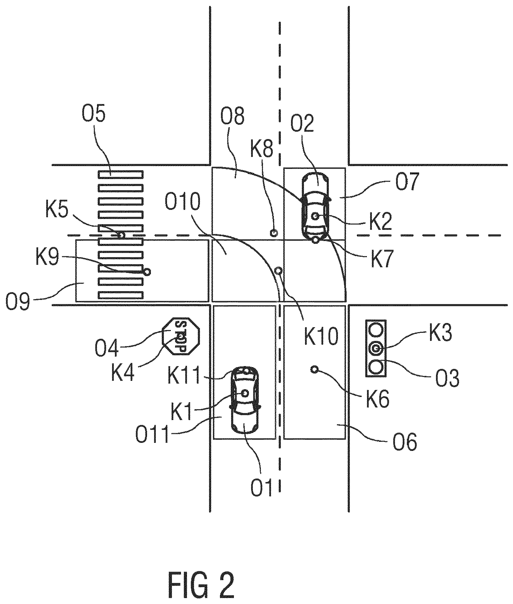

Figur 2 zeigt eine Draufsicht der Verkehrsszene gemäß Figur 1 mit generierten Knoten K1 bis K11 für ein mögliches Ausführungsbeispiel einer Graphenstruktur GS.

Zur Erzeugung der Graphenstruktur GS werden für alle verfügbaren dynamischen Informationen DI, statischen Informationen SI und semantischen Informationen SEI, jeweils näher dargestellt in Figur 5, Knoten K1 bis Km gebildet.

Die statischen Informationen SI umfassen dabei beispielsweise die als Spursegmente ausgebildeten Objekte O6 bis O11, die dynamischen Informationen DI beispielsweise die als Fahrzeug ausgebildeten Objekte O1, O2 und deren Trajektorien und die semantischen Informationen SEI beispielsweise das als Stoppschild ausgebildete Objekt O4, Lichtzeichenanlagen, beispielsweise das als Verkehrsampel ausgebildete Objekt O3, das als Fußgängerüberweg ausgebildete Objekt O5 und andere verkehrsregelnde Einrichtungen.

Vorliegend wird beispielsweise jedem Spursegment (Objekt O6 bis O11) ein Knoten K6 bis K11, dem Stoppschild (Objekt O4) ein Knoten K4, dem Fußgängerüberweg (Objekt O5) ein Knoten K5, der Verkehrsampel (Objekt O3) ein Knoten K3 und den als Fahrzeug ausgebildeten Objekten O1, O2 jeweils ein Knoten K1, K2 zugeordnet.

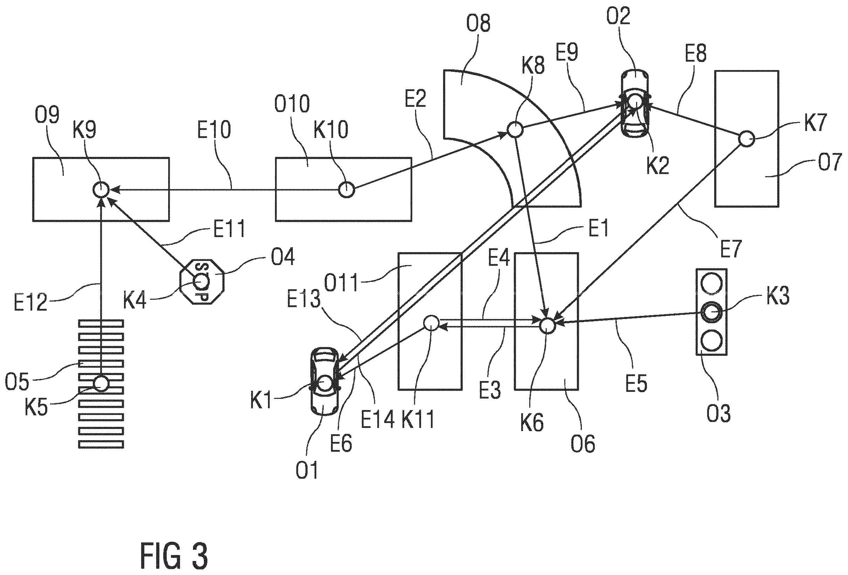

In Figur 3 sind die Knoten K1 bis K11 gemäß Figur 2 und diese verbindende Kanten E1 bis E14 für ein mögliches Ausführungsbeispiel einer Graphenstruktur GS dargestellt.

Die Kanten E1 bis E14 bilden dabei ebenfalls in Figur 5 näher dargestellte relationale Informationen RI, das heißt Abhängigkeiten und Beziehungen, zwischen den Knoten K6 bis K11 ab.

Beispielsweise bildet die Kante E1 als relationale Information RI ab, dass das als Spursegment ausgebildete Objekt O8 (Knoten K8) mit dem als Spursegment ausgebildeten Objekt O6 (Knoten K6) verbunden ist. Als beziehungsspezifisches Attribut ist beispielsweise hinterlegt, dass bei einer Befahrung der Straßenkreuzung das Objekt O8 auf das Objekt O6 folgt.

Beispielsweise bildet die Kante E2 als relationale Information RI ab, dass das als Spursegment ausgebildete Objekt O10 (Knoten K10) dem als Spursegment ausgebildeten Objekt O8 (Knoten K8) vorangeht. Als beziehungsspezifisches Attribut ist beispielsweise hinterlegt, das Objekt O10 der erste Vorgänger des Objekts O6 ist.

Beispielsweise bildet die Kante E3 als relationale Information RI ab, dass das als Spursegment ausgebildete Objekt O6 (Knoten K6) und das als Spursegment ausgebildete Objekt O11 (Knoten K11) verbunden sind. Als beziehungsspezifisches Attribut ist beispielsweise hinterlegt, dass das Objekt O6 der rechte Nachbar des Objekts O11 ist.

Beispielsweise bildet die Kante E4 als relationale Information RI ab, dass das als Spursegment ausgebildete Objekt O11 (Knoten K11) und das als Spursegment ausgebildete Objekt O6 (Knoten K6) verbunden sind. Als beziehungsspezifisches Attribut ist beispielsweise hinterlegt, dass das Objekt O11 der linke Nachbar des Objekts O6 ist.

Beispielsweise bildet die Kante E5 als relationale Information RI ab, dass ein Regelungsgehalt der Verkehrsampel (Objekt O3, Knoten K3) für das als Spursegment ausgebildete Objekt O6 (Knoten K6) gilt.

Beispielsweise bildet die Kante E6 als relationale Information RI ab, dass sich das als Spursegment ausgebildete Objekt O11 (Knoten K11) unterhalb des als Fahrzeug ausgebildeten Objekts O1 (Knoten K1) befindet. Als beziehungsspezifisches Attribut ist beispielsweise hinterlegt, dass sich das Spursegment mit einer bestimmten Wahrscheinlichkeit, zum Beispiel von 1,0, unterhalb des Fahrzeugs befindet.

Beispielsweise bildet die Kante E7 als relationale Information RI ab, dass das als Spursegment ausgebildete Objekt O7 (Knoten K7) und das als Spursegment ausgebildete Objekt O6 (Knoten K6) verbunden sind. Als beziehungsspezifisches Attribut ist beispielsweise hinterlegt, dass bei einer Befahrung der Straßenkreuzung das Objekt O7 auf das Objekt O6 folgt.

Beispielsweise bildet die Kante E8 als relationale Information RI ab, dass sich das als Spursegment ausgebildete Objekt O7 (Knoten K7) unterhalb des als Fahrzeug ausgebildeten Objekt O2 (Knoten K2) befindet. Als beziehungsspezifisches Attribut ist beispielsweise hinterlegt, dass sich das Spursegment mit einer bestimmten Wahrscheinlichkeit, zum Beispiel von 0,7, unterhalb des Fahrzeugs befindet.

Beispielsweise bildet die Kante E9 als relationale Information RI ab, dass sich das als Spursegment ausgebildete Objekt O8 (Knoten K8) unterhalb des als Fahrzeug ausgebildeten Objekts O2 (Knoten K2) befindet. Als beziehungsspezifisches Attribut ist beispielsweise hinterlegt, dass sich das Spursegment mit einer bestimmten Wahrscheinlichkeit, zum Beispiel von 0,3, unterhalb des Fahrzeugs befindet.

Beispielsweise bildet die Kante E10 als relationale Information RI ab, dass das als Spursegment ausgebildete Objekt O10 (Knoten K10) und das als Spursegment ausgebildete Objekt O9 (Knoten K9) verbunden sind. Als beziehungsspezifisches Attribut ist beispielsweise hinterlegt, dass das Objekt O10 dem Objekt O9 folgt.

Beispielsweise bildet die Kante E11 als relationale Information RI ab, dass ein Regelungsgehalt des Stoppschilds (Objekt O4, Knoten K4) für das als Spursegment ausgebildete Objekt O9 (Knoten K9) gilt.

Beispielsweise bildet die Kante E12 als relationale Information RI ab, dass der Fußgängerüberweg (Objekt O5, Knoten K5) über das als Spursegment ausgebildete Objekt O9 (Knoten K9) führt, das heißt dieses überlagert.

Beispielsweise bilden die Kante E13, E14 als relationale Information RI ab, dass die als Fahrzeuge ausgebildeten Objekte O1, O2 (Knoten K1, K2) miteinander interagieren. Beziehungsspezifische Attribute sind beispielsweise
- geometrische Relationen zwischen den Objekten O1, O2, zum Beispiel eine Positionsdifferenz zwischen den Fahrzeugen in Metern,
- geometrische Relationen zwischen den Objekten O1, O2, zum Beispiel eine Differenz von Gierwinkeln der Fahrzeuge zueinander, das heißt eine Differenz einer Ausrichtung der Fahrzeuge,
- kinematische Relationen zwischen den Objekten O1, O2, beispielsweise eine Geschwindigkeitsdifferenz zwischen den Fahrzeugen.

Die zuvor genannten Objekte O1 bis O11, die relationalen Informationen RI und die Attribute stellen mögliche Beispiele dar. Der beschriebene Ansatz ist dabei nicht auf die genannten Objekttypen, relationalen Informationen RI und Attribute beschränkt und kann hinsichtlich dieser beliebig um weitere mögliche Objekttypen, relationale Informationen RI und Attribute erweitert werden.

Unter Berücksichtigung der Kontextinformationen können Anomalien und Muster in der Graphenstruktur GS gefunden werden, die für eine Klassifikation von Geisterobjekten genutzt werden. Als Merkmale für die Klassifikation der Objekte O1 bis O11 werden die beispielsweise mit einer jeweiligen Sensormessung erfassten Attribute eines Objekts O1 bis O11 verwendet. Diese Attribute können beispielsweise eine Art des jeweiligen Objekts O1 bis O11, beispielsweise Fahrzeug, Verkehrszeichen, Fußgänger etc., und/oder einen Typ des jeweiligen Objekts O1 bis O11 berücksichtigen. Beispielsweise sind bei einem als Fahrzeug gearteten Objekt O1 bis O11 mögliche Objekttypen Personenkraftwagen, Lastkraftwagen, Busse, Motorräder etc. Auch können die Attribute weitere ein Objekt O1 bis O11 beschreibende Informationen, beispielsweise einen kinematischen Zustand und/oder Positionsinformationen, umfassen.

Das heißt, eine jeweilige Sensormessung eines zu klassifizierenden Objekts O1 bis O11 umfasst nicht nur das jeweilige Objekt O1 bis O11 selbst, sondern auch spezifische Attribute des Objekts O1 bis O11, die bei der Klassifizierung helfen.

Weiterhin können als Merkmale für die Klassifikation der Objekte O1 bis O11 als Attribute von Beziehungen der Objekte O1 bis O11 zueinander beispielsweise
- geometrische Relationen zwischen Objekten O1 bis O11 und/oder
- geometrische Relationen zwischen Objekten O1 bis O11 und Positionen in ihrer Umgebung und/oder
- kinematische Relationen zwischen dynamischen Objekten O1 bis O11 und/oder
- semantische Relationen zwischen Objekten O1 bis O11 und/oder
- statische Relationen zwischen den Objekten O1 bis O11
verwendet werden.

Beispielsweise können als Merkmale für die Klassifikation der Objekte O1 bis O11 Attribute derselben und/oder Attribute von Beziehungen der Objekte O1 bis O11 verwendet werden, welche beispielsweise
- zeitliche Informationen,
- einen Abstand des Objekts O1 bis O11 zum eigenen Fahrzeug bei einer ersten Detektion des Objekts O1 bis O11 und/oder bei ersten Sensormessungen einer Messreihe,
- eine Geschwindigkeit des Objekts O1 bis O11 im Vergleich zu umliegenden Objekten O1 bis O11,
- eine Position des Objekts O1 bis O11 im Vergleich zum Straßennetz und/oder
- eine Orientierung des Objekts O1 bis O11 im Vergleich zur Orientierung eines darunterliegenden Fahrspursegments
umfassen.

Das heißt beispielsweise, dass eine erste Sensormessung klassifiziert werden kann. Es können aber auch mehrere "erste" Sensormessungen klassifiziert werden. Es existieren Anforderungen für automatisiert fahrende Fahrzeuge, in welcher Zeit diese auf Objekte O1 bis O11 in ihrer Umgebung reagieren müssen. Wenn in dieser Zeit mehrere Sensormessungen desselben Sensors erfolgen, können somit auch mehrere "erste" Sensormessungen zur Klassifizierung verwendet werden. Es können somit auch Sensormessungen über die Zeit verwendet werden, so dass ein historischer Kontext eines Objekts O1 bis O11 ermittelt und somit hilfreiche Muster liefern kann. Dies ermöglicht beispielsweise, ein Verhalten von Fahrzeugen über die Zeit zu erfassen und zu berücksichtigen, schon bevor das eigentliche Objekt O1 bis O11 erkannt wird.

In einer möglichen Ausgestaltung ist weiterhin vorgesehen, dass bei Sensormessungen mittels mehrerer Sensoren, das heißt redundanten Sensoren, aus Sensormessungen einzelner Sensoren ermittelte Objekthypothesen berücksichtigt werden und anhand zumindest einer Objekthypothese zumindest einer Sensormessung eines Sensors eine Detektion von Geisterobjekten in mittels zumindest eines weiteren Sensors durchgeführten Sensormessungen plausibilisiert oder deplausibilisiert wird.

In Figur 4 ist ein mögliches Ausführungsbeispiel einer Graphenstruktur GS mit mehreren Knoten K1 bis Km und Beziehungen zwischen den Knoten K1 bis Km darstellenden Kanten E1 bis En dargestellt.

Dabei ist ein Knoten K1 beispielsweise ein Fußgängerüberweg, ein Knoten K2 eine Lichtzeichenanlage, ein Knoten K3 eine Fahrspur, ein Knoten K4 ein Verkehrsteilnehmer und ein Knoten Km ein Stoppschild.

Zwischen den Knoten K1 bis Km sind Kanten E1 bis En ausgebildet, welche Beziehungen zwischen den Knoten K1 bis Km, das heißt relationale Informationen RI, wiedergeben.

Beispielsweise bildet die Kante E1 als relationale Information RI ab, dass die Lichtzeichenanlage (Knoten K2) den Fußgängerüberweg (Knoten K1) anzeigt bzw. signalisiert.

Beispielsweise bildet die Kante E2 als relationale Information RI ab, dass der Verkehrsteilnehmer (Knoten K4) den Fußgängerüberweg (Knoten K1) überquert.

Beispielsweise bildet die Kante E3 als relationale Information RI ab, dass der Fußgängerüberweg (Knoten K1) über die Fahrspur (Knoten K3) führt bzw. diese überlagert.

Beispielsweise bildet die Kante E4 als relationale Information RI ab, dass der Verkehrsteilnehmer (Knoten K4) sich auf der Fahrspur (Knoten K3) befindet.

Beispielsweise bildet die Kante E5 als relationale Information RI ab, dass sich die Fahrspur (Knoten K3) unterhalb des Verkehrsteilnehmers (Knoten K4) befindet.

Beispielsweise bildet die Kante E6 als relationale Information RI ab, dass sich die Fahrspur (Knoten K3) in einem Konflikt mit einem anderen nicht näher dargestellten Knoten K5 bis Km-1 befindet oder sich der Knoten K5 bis Km-1 in einem Konflikt mit der Fahrspur befindet.

Beispielsweise bildet die Kante E7 als relationale Information RI ab, dass die Fahrspur (Knoten K3) mit einem anderen nicht näher dargestellten Knoten K5 bis Km-1 verbunden ist oder der Knoten K5 bis Km-1 mit der Fahrspur verbunden ist.

Beispielsweise bildet die Kante E8 als relationale Information RI ab, dass der Verkehrsteilnehmer (Knoten K4) mit einem anderen nicht näher dargestellten Knoten K5 bis Km-1 interagiert.

Beispielsweise bildet die Kante E9 als relationale Information RI ab, dass ein Regelungsgehalt der Lichtzeichenanlage (Knoten K2) für die Fahrspur (Knoten K3) gilt, das heißt auf der Fahrspur befindliche Objekte O1 bis O11 steuert.

Beispielsweise bildet die Kante E10 als relationale Information RI ab, dass die Fahrspur (Knoten K3) einem anderen nicht näher dargestellten Knoten K5 bis Km-1 vorangeht oder der Knoten K5 bis Km-1 der Fahrspur vorangeht.

Beispielsweise bildet die Kante En als relationale Information RI ab, dass ein Regelungsgehalt des Stoppschilds (Knoten Km) für die Fahrspur (Knoten K3) gilt, das heißt auf dieser befindliche Objekte O1 bis O11 stoppt.

Die dargestellte Graphenstruktur GS stellt lediglich ein mögliches Ausführungsbeispiel einer solchen dar und ist je nach Anforderungen und einer Umgebungssituation flexibel erweiterbar oder einschränkbar.

Figur 5 zeigt einen Aufbau einer Graphenstruktur GS sowie eine Verarbeitung in der Graphenstruktur GS vorhandener Informationen mit einem graphenbasierten künstlichen neuronalen Netzwerk N.

In einem möglichen Ausführungsbeispiel des Verfahrens zur Detektion von Geisterobjekten in Sensormessungen einer Umgebung eines Fahrzeugs erfolgt die Klassifikation der Geisterobjekte lernbasiert.

Dabei werden als Eingangsinformationen der Verkehrssituation die statischen Informationen SI, die dynamischen Informationen DI, die semantischen Informationen SEI und die relationalen Informationen RI in die Graphenstruktur GS überführt.

Anschließend wird eine Form eines lernbasierten Verfahrens, insbesondere das graphenbasierte künstliche neuronale Netzwerk N, verwendet, wobei Ausgangsinformationen AI Auskunft über die Klassifikation einzelner Objekte O1 bis O11 als Geisterobjekt und tatsächlich existierende Objekte O1 bis O11 geben.

## Patentansprüche

1. Verfahren zur Detektion von Geisterobjekten in Sensormessungen einer Umgebung eines Fahrzeugs, wobei
- aus einer digitalen Straßenkarte Karten-Kontextinformationen gewonnen werden und
- in der Umgebung des Fahrzeugs Objekte (O1 bis O11) mit zugehörigen Attributen erkannt werden,
**dadurch gekennzeichnet, dass**
- soziale Kontextinformationen der Objekte (O1 bis O11) zueinander generiert werden, wobei die sozialen Kontextinformationen aus Beziehungen von im Umkreis des Fahrzeugs vorhandenen Objekten (O1 bis O11) zueinander generiert werden,
- alle verfügbaren Daten einer Verkehrssituation mit dem Fahrzeug und den Objekten (O1 bis O11) in einer Graphenstruktur (GS), umfassend Knoten (K1 bis Km) und Kanten (E1 bis En), abgelegt werden, wobei relationale Informationen (RI) in der Graphenstruktur (GS) mittels der Kanten (E1 bis En) abgebildet werden,
- unter Berücksichtigung der Karten-Kontextinformationen und der sozialen Kontextinformationen Anomalien und Muster in Merkmalen der Graphenstruktur (GS) gesucht werden,
- anhand erkannter Anomalien und Muster Geisterobjekte klassifiziert werden und
- bei Sensormessungen mittels mehrerer Sensoren aus Sensormessungen einzelner Sensoren ermittelte Objekthypothesen berücksichtigt werden und anhand zumindest einer Objekthypothese zumindest einer Sensormessung eines Sensors eine Detektion von Geisterobjekten in mittels zumindest eines weiteren Sensors durchgeführten Sensormessungen plausibilisiert oder deplausibilisiert wird.

2. Verfahren nach Anspruch 1,
**dadurch gekennzeichnet, dass** als Merkmale der Graphenstruktur (GS)
- geometrische Relationen zwischen Objekten (O1 bis O11) und/oder
- geometrische Relationen zwischen Objekten (O1 bis O11) und Positionen in deren Umgebung und/oder
- kinematische Relationen zwischen dynamischen Objekten (O1 bis O11) und/oder
- semantische Relationen zwischen Objekten (O1 bis O11) und/oder
- statische Relationen zwischen den Objekten (O1 bis O11) verwendet werden.

3. Verfahren nach einem der vorhergehenden Ansprüche,
**dadurch gekennzeichnet, dass** als Merkmale der Graphenstruktur (GS)
- zeitliche Informationen und/oder
- ein Abstand des Fahrzeugs zu zumindest einem Objekt (O1 bis O11) in der Umgebung bei der ersten Detektion des Objekts (O1 bis O11) und/oder bei ersten Sensormessungen einer Messreihe und/oder
- eine Geschwindigkeit zumindest eines Objekts (O1 bis O11) im Vergleich zu weiteren umliegenden Objekten (O1 bis O11) und/oder
- eine Position zumindest eines Objekts (O1 bis O11) im Vergleich zu einem aus den Karten-Kontextinformationen ermittelten Straßennetz und/oder
- eine Orientierung zumindest eines Objekts (O1 bis O11) im Vergleich zu einer Orientierung einer unter dem Objekt (O1 bis O11) befindlichen Fahrspur verwendet werden.

4. Verfahren nach einem der vorhergehenden Ansprüche,
**dadurch gekennzeichnet, dass** die Klassifikation lernbasiert mittels eines graphenbasierten künstlichen neuronalen Netzwerks (N) erfolgt.

## Claims

1. Method for detecting ghost objects in sensor measurements of an environment of a vehicle,
- map context information being obtained from a digital road map and
- objects (O1 to O11) that have associated attributes being detected in the vehicle's environment,
**characterized in that**
- social context information of the objects (O1 to O11) in relation to one another is generated, the social context information being generated from relationships of objects (O1 to O11) present in the vicinity of the vehicle to one another,
- all available data of a traffic situation involving the vehicle and the objects (O1 to O11) are stored in a graph structure (GS) comprising nodes (K1 to Km) and edges (E1 to En), relational information (RI) being shown in the graph structure (GS) by means of the edges (E1 to En),
- anomalies and patterns in features of the graph structure (GS) are searched for, taking into account the map context information and the social context information,
- ghost objects are classified based on detected anomalies and patterns and
- in the case of sensor measurements carried out by means of a plurality of sensors, object hypotheses determined from sensor measurements of individual sensors are taken into account and, on the basis of at least one object hypothesis of at least one sensor measurement of a sensor, detection of ghost objects in sensor measurements carried out by means of at least one further sensor is checked for plausibility or implausibility.

2. Method according to claim 1,
**characterized in that** the following are used as features of the graph structure (GS)
- geometric relations between objects (O1 to O11) and/or
- geometric relations between objects (O1 to O11) and positions in their environment and/or
- kinematic relations between dynamic objects (O1 to O11) and/or
- semantic relations between objects (O1 to O11) and/or
- static relations between the objects (O1 to O11).

3. Method according to any of the preceding claims,
**characterized in that** the following are used as features of the graph structure (GS)
- temporal information and/or
- a distance of the vehicle to at least one object (O1 to O11) in the environment during the first detection of the object (O1 to O11) and/or during first sensor measurements of a measurement series and/or
- a speed of at least one object (O1 to O11) in relation to other nearby objects (O1 to O11) and/or
- a position of at least one object (O1 to O11) in relation to a road network determined from the map context information and/or
- an orientation of at least one object (O1 to O11) in relation to an orientation of a lane located below the object (O1 to O11).

4. Method according to any of the preceding claims,
**characterized in that** the classification takes place in a learning-based manner by means a graph-based artificial neural network (N).

## Revendications

1. Procédé pour la détection d'objets fantômes dans des mesures de capteurs d'un environnement d'un véhicule, dans lequel
- des informations de contexte de carte sont obtenues à partir d'une carte routière numérique et
- des objets (O1 à O11) comportant des attributs associés sont reconnus dans l'environnement du véhicule,
**caractérisé en ce que**
- des informations de contexte social des objets (O1 à O11) les uns par rapport aux autres sont générées, dans lequel les informations de contexte social sont générées à partir de relations entre des objets (O1 à O11) présents dans le périmètre du véhicule,
- toutes les données disponibles d'une situation de trafic avec le véhicule et les objets (O1 à O11) sont stockées dans une structure de graphe (GS), comprenant
des nœuds (K1 à Km) et des arêtes (E1 à En), dans lequel des informations relationnelles (RI) sont représentées dans la structure de graphe (GS) au moyen des arêtes (E1 à En),
- en tenant compte des informations de contexte de carte et des informations de contexte social, des anomalies et des modèles sont recherchés dans des caractéristiques de la structure de graphe (GS),
- les objets fantômes sont classifiés en fonction des anomalies et des modèles reconnus et
- lors de mesures de capteurs au moyen de plusieurs capteurs, des hypothèses d'objets déterminées à partir de mesures de capteurs de capteurs individuels sont prises en compte et, à l'aide d'au moins une hypothèse d'objet d'au moins une mesure de capteur d'un capteur, une détection d'objets fantômes est rendue plausible ou n'est pas rendue plausible dans des mesures de capteurs effectuées au moyen d'au moins un autre capteur.

2. Procédé selon la revendication 1, **caractérisé en ce que** sont utilisées comme caractéristiques de la structure de graphe (GS)
- des relations géométriques entre les objets (O1 à O11) et/ou
- des relations géométriques entre les objets (O1 à O11) et les positions dans leur environnement et/ou
- des relations cinématiques entre les objets (O1 à O11) dynamiques et/ou
- des relations sémantiques entre les objets (O1 à O11) et/ou
- des relations statiques entre les objets (O1 à O11).

3. Procédé selon l'une des revendications précédentes,
**caractérisé en ce que** sont utilisées comme caractéristiques de la structure de graphe (GS)
- des informations temporelles et/ou
- une distance entre le véhicule et au moins un objet (O1 à O11) dans l'environnement lors de la première détection de l'objet (O1 à O11) et/ou lors de premières mesures de capteurs d'une série de mesures et/ou
- une vitesse d'au moins un objet (O1 à O11) par rapport à d'autres objets (O1 à O11) environnants et/ou
- une position d'au moins un objet (O1 à O11) par rapport à un réseau routier déterminé à partir des informations de contexte de carte et/ou
- une orientation d'au moins un objet (O1 à O11) par rapport à une orientation d'une voie de circulation se trouvant sous l'objet (O1 à O11).

4. Procédé selon l'une des revendications précédentes,
**caractérisé en ce que** la classification est effectuée sur la base de l'apprentissage au moyen d'un réseau neuronal artificiel (N) basé sur un graphe.
